# EUROPEAN PATENT APPLICATION

(11) **EP 1 375 302 A2**
(43) Date of publication of application: **02.01.2004**
(21) Application number: 03076955.8
(22) Date of filing: 24.06.2003
(51) Int. Cl.: B62D 5/065, F16H 3/08

(54) **Apparatus for varying the speed of rotation of driven shafts of servo devices in particular for vehicles and the like**

(30) Priority: 28.06.2002 IT MI20021440
(71) Applicant: Baruffaldi S.p.A., 20097 San Donato Milanese, Milan (IT)
(72) Inventor: Boffelli, Piercarlo, Milano (IT)
(74) Representative: Raimondi, Alfredo, Dott. Ing. Prof.

(57) **Abstract**

Apparatus for varying the speed of rotation of a driven shaft (1a) for actuating rotating devices (1) of servo systems, in particular for vehicles, comprising an actuating shaft (2a) and a driven shaft (1a), wherein said actuating shaft (2a) and driven shaft (1a) have, arranged between them, a friction clutch (10;110), engagement/disengagement of which is performed by associated actuating means (30) controlled by means for detecting the speed of the actuating shaft (2a), so as to produce a first speed of rotation of the driven shaft, and a freewheel device (20; 120) able to produce a second speed of rotation of the driven shaft (1a), lower than the first speed.

## Description

The present invention relates to an apparatus for varying the speed of rotation of driven shafts, in particular for auxiliary devices such as servo systems of vehicles and the like.

It is known in the sector relating to the production of vehicles, in particular industrial vehicles such as lorries and the like, that there exists the need to provide steering servo means for facilitating driving of the vehicle. These servo means usually comprise a hydraulic circuit which is fed and kept under pressure by an associated fluid supply pump, whence the current term "hydrostatic steering".

It is also known that a preferred mode of operation of hydrostatic steering involves full activation of the fluid supply circuit - and therefore the servo steering - under slow-running conditions, which are typical of parking manoeuvres and the like, and a partial activation of the servo steering during travel in a straight line at high speed; in this latter condition, in fact it is preferable to have a more rigid steering shaft in order to ensure greater stability of travel of the vehicle.

It is also known that the pump of the servo steering system uses a considerable amount of power and must therefore be kept running at full power only as and when actually required.

The technical problem which is posed therefore is that of providing an apparatus for varying the speed of rotation of driven shafts such as the actuating shaft of a pump for steering servo systems of vehicles and the like.

Within the context of this problem a further requirement is that the apparatus should allow a variation in the said speed of rotation of the shaft, without the latter assuming the idle condition, and that it should have a small volume in order to limit the dimensions of the actuating pulleys and the overall space occupied.

These technical problems are solved according to the present invention by an apparatus for varying the speed of rotation of a driven shaft for actuating rotating devices, such as pumps, of servo systems, in particular for vehicles, comprising an actuating shaft and a driven shaft, wherein said actuating shaft and driven shaft have, arranged between them, a friction clutch, engagement/disengagement of which is performed by associated actuating means controlled by means for detecting the speed of the actuating shaft, so as to produce a first speed of rotation of the driven shaft, and a freewheel device able to produce a second speed of rotation of the driven shaft, lower than the first speed.

Further characteristic features will emerge from the description, provided below, of a non-limiting example of embodiment of the device according to the invention provided with reference to the accompanying figure in which:
- Figure 1 shows a schematic cross-section along an axial plane of the apparatus according to the present invention; and
- Figures 2 shows a schematic cross-section, similar to that of Fig. 1, of a second embodiment of the apparatus according to the present invention.

As illustrated, the supply pump 1 of the hydrostatic steering circuit is mounted on a respective driven shaft 1a arranged parallel to an actuating shaft 2a in turn made to rotate by a corresponding power take-off 2 connected in a known manner (not shown) to the driving shaft.

The speed variation apparatus according to the invention, which comprises a friction clutch 10 and a freewheel device 20, is arranged between the actuating shaft 2 and the driven shaft 1.

In greater detail, the friction clutch 10 is of the spring type which comprises:
- a rotor 11 consisting of a gear mounted, with the arrangement in between of a bearing 11a, on the driven shaft 1a rotated by a gear 11b keyed onto the actuating shaft 2a; the said rotor 11 has, integral therewith, a first series of rings 11c made of friction material and able to be mate axially with:

- a second series of rings 12c made of friction material and integral with a bell 12 coaxial with the driven shaft 1a and movable parallel to the axis of the latter;
- a flange 13 coaxial with the shaft 1a and locked rotationally therewith by means of a key 13a; a set of Belleville spring washers 14, able to keep the bell 12 axially pushed away from the flange 13, is inserted between the flange 13 and the bell 12.

The means 30 for actuating the friction clutch comprise a piston 31 inserted inside a chamber 32 formed in a ring 33 which is fixed to base 4 of the engine and the pump 1.

The chamber 32 is connected, by means of channels 32a, to an electric valve 35 able to supply and discharge alternately the chamber 32 for actuation of the piston 31.

Said piston 31 has in turn a radial duct 31a which connects the chamber 32 to an additional duct 34 of the ring 33 which in turn emerges externally.

Sealing of the piston is performed by means of toroidal rings 36 arranged in the axial direction on both sides of the said radial duct 31a and able to define an interspace 33a communicating with the associated-respectively outer and inner - ends of the radial duct 31a and the venting duct 34, i.e. able to release externally any pressurised air leaks which otherwise would pressurise the whole housing inside which oil is also present.

The freewheel device 20 is composed of:
- an outer ring 21 forming the hub of a gear 21b provided with teeth 21a able to mesh with corresponding teeth 22a of a pinion 22 integral with the actuating shaft 2a;
- an inner ring 23 mounted on the driven shaft 1a and locked in rotation therewith by means of a key 23a;
- a cage 24 arranged between the two rings and carrying contact bodies 24a able to produce transmission of a torque to the shaft 1a or a substantial idle condition with respect to the latter, depending on the speed of rotation of the said shaft;
- a pair of bearings 25 axially mounted on the two opposite sides of the freewheel so as to centre it with respect to the inner/outer rings and keep it in position once assembled.

The operating principle of the apparatus is as follows:
- in low-speed conditions, detected by a central control unit (not shown), the chamber 32 is kept discharged by the electric valve 35; the springs 14 reacting against the flange 13 push the bell 12 outwards, causing compression of the disks 12c which, mating frontally with the disks 11c of the rotor 11, start to rotate, causing rotation of the flange 13 and therefore the shaft 1a and the pump 1 which, rotating at the same speed as the driving shaft 2a, causes operation of the servo steering at full power;
- the high speed of rotation of the shaft 1a produces an excess speed condition thereof with respect to the outer ring 21 of the freewheel device which remains substantially idle relative to the shaft 1a.

If the speed of the vehicle and therefore the actuating shaft 2a increases beyond a predefined value:
- the central unit detects the new value and actuates the electric valve 35 which activates supplying of the duct 32a feeding the chamber 32 which, being pressurised, axially pushes the piston 31 against the bell 12 which in turn is axially pushed towards the flange 13 against the action of the spring 14;
- this thus produces release of the disks 12c,11c which cease to transmit the power to the flange 13 which therefore remains in the idle condition;
- slowing of the shaft 1a produces engagement again of the previously neutralised freewheel mechanism, which starts to operate, transmitting to the driven shaft 1a a speed of rotation determined by the reduction ratio existing between the pinion 22 and the gear 21b integral with the outer ring of the freewheel 20.

In this way the shaft 1a rotates at a slow speed, causing a reduction in the action of the pump and therefore operation of the servo steering at a rate reduced, by a percentage amount, compared to the full power condition.

As can be seen, the apparatus also guarantees, owing to the springs 14 of the friction clutch 10, reliable operation which ensures engagement of the friction clutch and therefore operation, at full efficiency, of the hydrostatic steering system in the event of incorrect operation of the control system.

In addition to this, it is pointed that the pump of the hydrostatic steering system never assumes the idle condition and that the overall dimensions remain limited.

In the example of embodiment illustrated it is preferred to mount the friction clutch on the driven shaft 1a in order to keep it above the level of the oil contained in the housing 50 of the apparatus, thus obtaining the further advantage of an improved performance of the friction clutch in particular in the case of cold starting which is typical of northern countries.

It is envisaged, however, that the apparatus may also be designed with the friction clutch mounted on the actuating shaft 2a and the gear on the driven shaft, provided that the friction clutch ensures in any case full-power operation of the pump and the freewheel gear ensures low-speed operation of the pump.

According to another preferred embodiment it is envisaged moreover that the fuel pump 3 which, as is known, must always operate at full power is mounted on the free end of the actuating shaft 2a.

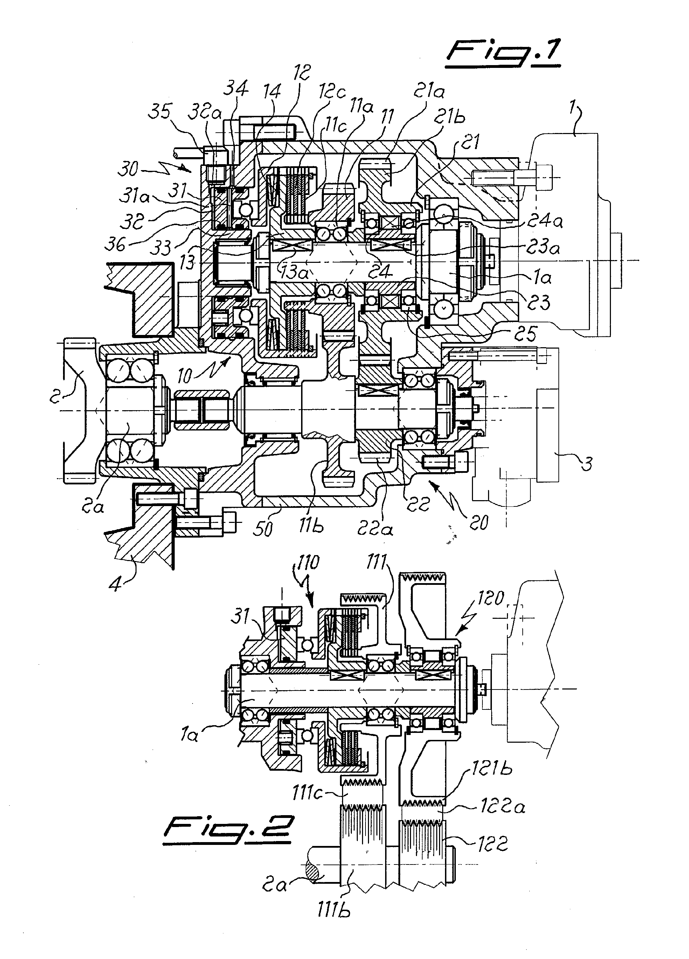

Fig. 2 shows moreover a further embodiment of the apparatus according to the invention. In this configuration the friction clutch 110 has a rotor 111 consisting of a pulley provided grooves able to engage with a corresponding belt 111c which is endlessly wound on a second pulley 111b locked rotationally to the actuating shaft 2a.

The same shaft 2a has, mounted thereon, a second pulley 122 coupled to a respective belt 122a wound on a second pulley 121b mounted on the driven shaft 1a and forming the outer ring of the freewheel mechanism 120.

With suitable dimensioning of the diameters of the pulleys 111b, 111 and 122,121b it is possible to obtain the desired ratios for transmission of the speed to the driven shaft 1a so as to maintain the already described operating condition of the apparatus.

In this configuration the piston of the friction clutch does not require safety means since any air leakage is directed into the external environment and not into the engine housing.

## Claims

1. Apparatus for varying the speed of rotation of a driven shaft (1a) for actuating rotating devices (1), such as pumps, of servo systems, in particular for vehicles, comprising an actuating shaft (2a) and a driven shaft (1a), **characterized in that** the actuating shaft (2a) and the driven shaft (1a) have, arranged between them, a friction clutch (10;110), engagement/disengagement of which is performed by associated actuating means (30) controlled by means for detecting the speed of the actuating shaft (2a), so as to produce a first speed of rotation of the driven shaft, and a freewheel device (20; 120) able to produce a second speed of rotation of the driven shaft (1a), lower than the first speed.

2. Apparatus according to Claim 1, **characterized in that** said friction clutch (10;110) is of the spring type (14).

3. Apparatus according to Claim 1, **characterized in that** said friction clutch (10) comprises a rotor (11) consisting of a gear mounted on the driven shaft (1a) with the arrangement of a bearing (11a) in between, a bell (12), coaxial with the driven shaft (1a) and movable parallel to the axis of the latter, and a flange (13) coaxial with the shaft (1a) and locked in rotation with the latter by means of a key (13a).

4. Apparatus according to Claim 3, **characterized in that** a first series of rings (11c) made of friction material and able to mate axially with a second series of rings (12c) made of friction material and integral with the bell (12) is integrally joined to the said rotor (11).

5. Apparatus according to Claim 3, **characterized in that** a set of Belleville spring washers (14) is inserted between the flange (13) and the bell (12), said springs being able to keep the said bell (12) axially pushed away from the flange (13).

6. Apparatus according to Claim 3, **characterized in that** said rotor (11) is made to rotate by a gear (11b) keyed onto the actuating shaft (2a).

7. Apparatus according to Claim 3, **characterized in that** said rotor of the friction clutch (110) consists of a pulley (111).

8. Apparatus according to Claim 7, **characterized in that** said pulley is actuated by means of a belt (111c) endlessly wound on a corresponding pulley (111b) mounted on the actuating shaft (2a).

9. Apparatus according to Claim 1, **characterized in that** said means (30) for actuating the friction clutch comprise a piston (31) inserted inside a chamber (32) formed in a ring (33) fixed to the base (4) of the engine.

10. Apparatus according to Claim 9, **characterized in that** the chamber (32) is connected, by means of channels (32a), to an electric valve (35) able to supply and discharge alternately the chamber (32) for actuation of the piston (31).

11. Apparatus according to Claim 9, **characterized in that** said piston (31) has in turn a radial duct (31a) which connects the chamber (32) to an additional venting duct (34) which in turn emerges externally.

12. Apparatus according to Claim 9, **characterized in that** sealing of the piston is performed by means of toroidal rings (36) arranged in the axial direction on both sides of the said radial duct (31a) and able to define an interspace (33a) communicating with the associated - respectively outer and inner - ends of the radial duct (31a) and the venting duct (34).

13. Apparatus according to Claim 1, **characterized in that** said freewheel device (20) is composed of:
- an outer ring (21) forming the hub of a gear (21b) provided with teeth (21a) able to mesh with corresponding teeth (22a) of a pinion (22) integral with the driving shaft (2a);
- an inner ring (23) mounted on the driven shaft (1a) and locked in rotation therewith by means of a key (23a) ;
- a cage (24) arranged between the two rings (21,23) and carrying contact bodies (24a) able to produce transmission of a torque to the shaft (1a) or a substantial idle condition with respect to the latter, depending on the speed of rotation of the said shaft.

14. Apparatus according to Claim 13, **characterized in that** it comprises a pair of bearings (25) axially mounted on the two opposite sides of the freewheel device so as to centre it with respect to the inner/outer rings and keep it in position once assembled.

15. Apparatus according to Claim 13, **characterized in that** the outer ring of the freewheel device consists of a pulley (121b).

16. Apparatus according to Claim 15, **characterized in that** said pulley (121b) is actuated by a respective belt (122a) wound on a second pulley (122) mounted on the actuating shaft (2a).

17. Servo system in particular for vehicle steering devices, comprising an actuating shaft (2a) and a driven shaft (1a) for operating rotating devices (1) supplying the circuit of the system, **characterized in that** it comprises an apparatus for varying the speed of rotation of the driven shaft (1a) arranged between the latter and the actuating shaft (2a), which apparatus is provided with a friction clutch (10;110), engagement/disengagement of which is performed by associated actuating means (30) controlled by means for detecting the speed of the actuating shaft (2a), so as to produce a first speed of rotation of the driven shaft, and a freewheel device (20; 120) able to produce a second speed of rotation of the driven shaft (1a), lower than the first speed.

18. System according to Claim 17, **characterized in that** said rotating supply devices consist of a pump (1).

19. System according to Claim 17, **characterized in that** said friction clutch (10;110) is of the spring type (14).

20. System according to Claim 17, **characterized in that** said friction clutch (10) comprises a rotor (11) consisting of a gear mounted on the driven shaft (1a) with the arrangement of a bearing (11a in between, a bell (12), coaxial with the driven shaft (1a) and movable parallel to the axis of the latter, and a flange (13) coaxial with the shaft (1a) and locked in rotation with the latter by means of a key (13a).

21. System according to Claim 20, **characterized in that** a first series of rings (11c) made of friction material and able to mate axially with a second series of rings (12c) made of friction material and integral with the bell (12) is integrally joined to the said rotor (11).

22. System according to Claim 20, **characterized in that** a set of Belleville spring washers (14) is inserted between the flange (13) and the bell (12), said springs being able to keep the said bell (12) axially pushed away from the flange (13).

23. System according to Claim 20, **characterized in that** said rotor (11) is made to rotate by a gear (11b) keyed onto the actuating shaft (2a).

24. System according to Claim 20, **characterized in that** said rotor of the friction clutch (110) consists of a pulley (111).

25. System according to Claim 24, **characterized in that** said pulley is actuated by means of a belt (111c) endlessly wound on a corresponding pulley (111b) mounted on the actuating shaft (2a).

26. System according to Claim 17, **characterized in that** said means (30) for actuating the friction clutch comprise a piston (31) inserted inside a chamber (32) formed in a ring (33) fixed to the base (4) of the engine.

27. System according to Claim 26, **characterized in that** the chamber (32) is connected, by means of channels (32a), to an electric valve (35) able to supply and discharge alternately the chamber (32) for actuation of the piston (31).

28. System according to Claim 27, **characterized in that** said piston (31) has in turn a radial duct (31a) which connects the chamber (32) to an additional venting duct (34) which in turn emerges externally.

29. System according to Claim 27, **characterized in that** sealing of the piston is performed by means of toroidal rings (36) arranged in the axial direction on both sides of the said radial duct (31a) and able to define an interspace (33a) communicating with the associated - respectively outer and inner - ends of the radial duct (31a) and the venting duct (34).

30. System according to Claim 17, **characterized in that** said freewheel device (20) is composed of:
- an outer ring (21) forming the hub of a gear (21b) provided with teeth (21a) able to mesh with corresponding teeth (22a) of a pinion (22) integral with the driving shaft (2a) ;
- an inner ring (23) mounted on the driven shaft (1a) and locked in rotation therewith by means of a key (23a);
- a cage (24) arranged between the two rings (21,23) and carrying contact bodies (24a) able to produce transmission of a torque to the shaft (1a) or a substantial idle condition with respect to the latter, depending on the speed of rotation of the said shaft.

31. System according to Claim 30, **characterized in that** it comprises a pair of bearings (25) axially mounted on the two opposite sides of the freewheel device (20) so as to centre it with respect to the inner/outer rings (21,23)and keep it in position once assembled.

32. System according to Claim 30, **characterized in that** the outer ring of the freewheel device consists of a pulley (121b).

33. System according to Claim 32, **characterized in that** said pulley (121b) is actuated by a respective belt (122a) wound on a second pulley (122) mounted on the actuating shaft (2a).
